# FASCICULE DE BREVET EUROPEEN

(11) **EP 3 140 261 B1**
(45) Date de publication et mention de la délivrance du brevet: **25.07.2018**
(21) Numéro de dépôt: 15726233.8
(22) Date de dépôt: 04.05.2015
(51) Int. Cl.: C03C 17/42

(54) **VERRE ÉMAILLÉ TREMPABLE Á TENUE MÉCANIQUE AMÉLIORÉE**
VORSPANNBARES EMAILLIERTES GLAS MIT VERBESSERTER MECHANISCHEN FESTIGKEIT
TEMPERABLE ENAMELLED GLASS WITH IMPROVED MECHANICAL STRENGTH

(30) Priorité: 07.05.2014 FR 1454125
(43) Date de publication de la demande: 15.03.2017
(73) Titulaire: Saint-Gobain Glass France, 92400 Courbevoie (FR)
(72) Inventeur: CLABAU, Frédéric, 49100 Angers (FR); GARNIER, Louis, 75012 Paris (FR); RACHET, Vincent, F-92120 Montrouge (FR)
(74) Mandataire: Saint-Gobain Recherche
(86) Numéro de dépôt international: PCT/FR2015/051184
(87) Numéro de publication internationale: WO 2015/170047

(56) Documents cités:
- WO-A1-2011/051459
- WO-A1-2014/016518
- US-A1- 2007 042 177

## Description

La présente invention a pour objet un substrat en verre ou en vitrocéramique, recouvert d'une couche d'émail, destiné à être utilisé dans le domaine du bâtiment intérieur et/ou extérieur, ainsi que son procédé de fabrication. Le substrat revêtu de la couche d'émail est trempable, dans le sens où il est possible de lui faire subir ultérieurement un traitement de trempe à température élevée pour obtenir un verre trempé de sécurité. Le verre émaillé est un verre dont au moins une de ses faces, ou une partie d'une de ses faces, est revêtue d'une couche d'émail qui a été durcie ou traitée thermiquement. Il est notamment destiné à décorer les murs de bâtiment ou des surfaces meublées (porte, étagères, ..). Des applications de ce produit sont notamment envisageables dans le domaine de la décoration, des vitrocéramiques et dans le domaine de l'automobile.

Les émaux utilisés pour revêtir des substrats verriers sont constitués d'une poudre comprenant une fritte de verre, des pigments inorganiques et d'éventuelles autres charges minérales, d'un médium organique, d'un ou plusieurs solvants, et d'additifs ayant pour la plupart une fonction rhéologique. Le médium, souvent à base de résine, permet notamment de créer un lien entre les différentes particules lorsque la couche est déposée et séchée. Le médium se consume lors de la cuisson de l'émail.

L'inconvénient principal de l'émail est que la couche déposée sur le substrat possède avant fusion une très faible résistance mécanique et hydrolytique. Il n'est donc pas possible de transporter, stocker, découper, border ou laver un verre revêtu d'un émail tant qu'il n'a pas été chauffé et que la fritte de verre ne fonde. Ce chauffage est souvent réalisé à haute température, typiquement au-delà de 600°C. Or, à moins de réaliser une étape supplémentaire de détrempe, on ne peut plus transformer un verre trempé. Par conséquent, l'émail doit impérativement être déposé sur des panneaux aux dimensions définitives. Ce type de produit est peu adapté à l'habitat intérieur où les dimensions sont souvent propres au client. De plus, il impose une contrainte forte au transformateur quant à la manipulation des substrats revêtus d'émail qui, s'ils ne sont pas correctement séchés, sont très facilement endommageables par simple contact durant les manipulations.

La solution qui consiste à utiliser une peinture organique permet d'améliorer la tenue mécanique mais n'autorise pas de trempe à haute température. Par conséquent, d'autres solutions ont été envisagées. La demande de brevet WO 2007/ 104752 décrit un système bi-couche dans lequel une couche de résine jouant le rôle d'une couche de protection sacrificielle est déposée sur une couche d'émail. Ce système nécessite de nombreuses étapes industrielles puisqu'il faut consolider la première couche avant de pouvoir déposer la seconde. Il existe également un risque important de dégradation de la couche d'émail lors du dépôt de la couche de résine. De surcroît, la quantité de résine dans ce système bi-couche est relativement importante et il est difficile d'éliminer la totalité de la résine lors de la trempe, ce qui peut provoquer l'apparition de résidus carbonés noirs laissant des traces sur le substrat revêtu. La demande de brevet WO 2011/095471 propose donc un procédé de trempe particulier pour ce type de système. La surcouche de protection de l'émail envisagée ne permet toutefois pas d'améliorer l'adhésion de la couche d'émail au substrat verrier. La transformation avant trempe de ce système bi-couche, comme par exemple les étapes de perçage ou polissage qui impliquent la présence d'eau, reste toujours délicate.

Une autre possibilité envisagée pour améliorer la tenue mécanique de l'émail consiste à augmenter la quantité de résine. On peut citer par exemple les demandes WO 2011/ 051459 ou WO 2012/ 004337 qui décrivent des revêtements à base d'émail comprenant entre 11 et 40%en poids de matières organiques. Le principal problème de ces couches reste une faible adhésion au verre, principalement en présence d'eau, ce qui conduit fréquemment à une délamination de la couche colorée lors des étapes classiques de bordage ou de perçage du substrat revêtu, voire lors du stockage en conditions humides. Un second problème potentiel, dû aux teneurs très élevées en résine et gênant d'un point de vue industriel, est l'apparition de flammes dans le four de trempe et d'importants dégagements gazeux, à même de dégrader les résistances chauffantes du four et de présenter un risque industriel. Comme mentionné précédemment, une forte quantité de résine peut entraîner également l'apparition de traces noires sur le substrat revêtu après trempe.

La rayabilité de ce type d'émail avant trempe n'est également pas très bonne ce qui est notamment lié à la faible adhésion de la couche d'émail au substrat verrier.

Il est possible d'utiliser un agent promoteur d'adhésion avec une fonction organique pour améliorer la tenue mécanique des couches contenant de la résine (notamment les peintures organiques), afin d'assurer une liaison chimique entre la surface du verre ou de la vitrocéramique inorganique et la résine organique. Cependant, dès lors que la quantité de résine dans la couche est faible, ce qui est souhaitable lorsque l'on veut éviter les résidus carbonés noirs après la trempe, le lien entre cette résine et le verre ne s'opère pas sur toute la surface. Au niveau de cette interface verre-couche, les particules inorganiques de la couche, que ce soit des pigments, des charges ou de la fritte de verre dans le cas de l'émail, qui ne sont pas enrobées par de la résine vont se trouver en contact direct avec le verre, et la forme non-plane de leur surface va entraîner une très faible adhésion à cet endroit de l'interface entre le verre et la couche.

On cherche par conséquent à mettre au point un substrat en verre ou en vitrocéramique revêtu d'une couche d'émail présentant une bonne adhésion au substrat, qui présente l'opacité recherchée, et qui soit transportable, stockable, découpable, bordable, lavable et trempable (c'est-à-dire susceptible de subir une trempe à une température supérieure ou égale à 600°C) sans qu'il soit nécessaire d'effectuer pour l'obtenir un traitement du substrat revêtu à température élevée. C'est dans ce cadre que s'inscrit la présente invention.

La présente invention porte sur un substrat en verre ou en vitrocéramique trempable ou susceptible de subir une trempe à une température supérieure à 600°C revêtu au moins en partie d'une sous-couche à base de résine organique et d'une couche d'émail comprenant une résine organique et des constituants inorganiques dont au moins une fritte de verre et au moins un pigment, ladite sous-couche étant située entre le substrat et la couche d'émail. Un tel substrat est susceptible d'être trempé et est donc considéré comme « trempable ».

Au sens de la présente invention, sous le terme « à base de », on comprend que la sous-couche comprend au moins 50% en poids de résine organique. Les autres constituants potentiels de cette sous-couche sont principalement des charges minérales telles que des pigments ou de la fritte de verre. La sous-couche peut également comprendre des additifs organiques en faible quantité, typiquement moins de 1%en masse pour chacun des additifs organiques.

De préférence, la sous-couche comprend au moins 90% en poids de résine organique.

De façon encore plus préférée, la sous-couche est constituée essentiellement de résine organique.

Etant donné que la totalité de la résine doit bruler lors de la trempe, l'épaisseur de la sous-couche, mesurée après séchage, doit être très faible. Elle est inférieure à 10 µm, de préférence à 5 µm et encore plus préférentiellement inférieure à 1 µm.

Selon un mode de réalisation, la sous-couche est directement en contact avec le substrat en verre ou en vitrocéramique.

Selon un autre mode de réalisation, le substrat est revêtu en outre d'une couche d'agent promoteur d'adhésion, placée en dessous de la sous-couche à base de résine, directement en contact du substrat. De façon classique, l'agent promoteur d'adhésion comprend un silane et cette couche est monomoléculaire. Dans ce cas, la sous-couche est directement en contact avec la couche d'agent promoteur d'adhésion, et la couche d'émail reste en contact direct de la sous-couche à base de résine.

Pour améliorer l'adhésion de la sous-couche, il est également possible de rendre le substrat en verre ou en vitrocéramique plus rugueux, par exemple par sablage ou par matage à l'acide.

L'adhésion entre la couche d'émail et le substrat revêtu d'une sous-couche à base de résine est nettement améliorée par rapport à une couche d'émail qui serait directement placée sur le substrat en verre ou en vitrocéramique. La tenue mécanique de la couche d'émail est ainsi grandement améliorée. Le substrat revêtu de la sous-couche et de la couche d'émail peut être manipulé avant la trempe sans précaution particulière. L'adhésion de la couche d'émail est suffisante pour qu'elle ne soit pas endommagée lors des manipulations.

Le substrat ainsi revêtu, donc comprenant la sous-couche à base de résine et la couche d'émail est dit trempable puisqu'il est susceptible d'être trempé pour répondre aux normes de sécurité.

La résine organique présente dans la sous-couche est du type résine acrylate ou polyacrylate, résine alkyde, résine époxy, résine polyuréthane, résine amino, résine acrylique, résine polyester, résine polyamide, résine phénolique, et/ou résine cellulosique.

De façon avantageuse, la résine contenue dans l'émail est du même type chimique que celle présente dans la sous-couche.

Selon un mode de réalisation préféré, la sous-couche comprend une résine acrylate et la couche d'émail comprend une résine comprenant au moins un composé choisi parmi un monomère présentant une fonctionnalité comprise entre 1 et 6 et un oligomère insaturé de type acrylate. Le monomère est choisi parmi les composés à base de diméthacrylate, diacrylate, triméthacrylate, triacrylate, tétracrylate et pentacrylate. A titre d'exemples de monomères bifonctionnels, on peut citer le tricyclodécane diméthanol diacrylate, le tricyclodécane diméthanol diméthacrylate, le 1,6-hexanediol diacrylate, le dipropylène glycol diacrylate, le bisphénol A diacrylate éthoxylé, le polyéthylène glycol diacrylate, le néopentyle glycol diacrylate propoxylé, le tétraéthylène glycol diacrylate, le triéthylène glycol diacrylate, le tripropylène glycol diacrylate, le 1,3-butylène glycol diméthacrylate, le 1,4-butanediol diméthacrylate, le 1,6-hexanediol diméthacrylate, le bisphénol A diméthacrylate éthoxylé, le polyéthylène glycol diméthacrylate, le tétraéthylène glycol diméthacrylate, le triéthylène glycol diméthacrylate, l'éthylèneglycoldiméthacrylate et le diéthylène glycol diméthacrylate. A titre d'exemples de monomères trifonctionnels, on peut citer le triméthylolpropane triacrylate éventuellement éthoxylé ou propoxylé, le pentaérythritol triacrylate éthoxylé, le glycéryl triacrylate propoxylé et le triméthylolpropane triméthacrylate.

L'oligomère insaturé qui est un composé de type acrylate, est choisi parmi les polyéther acrylates, les styrène acrylates, les époxy acrylates, les uréthane acrylates, les ammonium acrylates et les polyester acrylates. De façon préférée, l'oligomère insaturé est un styrène acrylate ou un polyuréthane acrylate.

Ces deux types d'acrylate permettent avantageusement d'avoir à la fois une bonne adhésion de la couche d'émail sur la sous-couche à base de résine acrylate et une bonne rayabilité.

Dans la suite du texte, on parlera de « séchage » de la sous-couche et de l'émail lorsqu'on leur applique un flux d'air éventuellement chaud et/ou qu'on leur fait subir un traitement thermique à une température inférieure à 250°C. L'étape de séchage correspond à l'évaporation des solvants et/ou à la réticulation de la résine organique. On parlera de « trempe » lorsque le traitement thermique est réalisé à des températures élevées, classiquement à des températures supérieures à 600°C. La trempe permet d'obtenir un verre répondant aux normes de sécurité.

Les teneurs en résine organique présente dans la couche d'émail sont données après séchage de l'émail, c'est-à-dire après évaporation des solvants présents, mais avant la trempe. Le pourcentage en poids de résine est déterminé relativement à la quantité totale de matières inorganiques (fritte de verre et charges minérales dont le pigment) présentes dans l'émail. La formulation de la couche d'émail est préparée en mélangeant les différents constituants, soit la fritte de verre, le pigment inorganique et les éventuelles autres charges minérales et les composés organiques, de sorte à obtenir la quantité souhaitée de résine organique. Après séchage, comme la quantité totale d'additifs organiques est généralement très faible (généralement moins de 2% en poids au total), il est également possible de déterminer la quantité de résine dans la couche d'émail par analyse thermogravimétrique (ATG). La teneur en résine organique dans la couche d'émail varie entre 5 et 25%en poids, préférentiellement entre 5 et 17%en poids, par rapport au poids total des constituants de la couche d'émail après séchage.

La sous-couche à base de résine et/ou la couche d'émail peuvent comprendre un additif susceptible de libérer de l'oxygène lors de la trempe. Cet additif permet d'améliorer la combustibilité de la résine organique tout en conservant de bonnes propriétés mécaniques pour l'empilement final, puisqu'il est possible d'en utiliser une plus grande quantité sans avoir de résidus carbonés noirs. Il peut être choisi parmi l'amidon, les oxalates, les polylactates, les nitrates d'alcalin, les carbonates et les sulfates d'alcalin. De façon préférée, l'additif est un nitrate, un carbonate ou un sulfate d'alcalin. Lorsqu'il est présent, cet additif existe dans une teneur comprise entre 0,01 et 5 % en poids, de préférence entre 0,1 et 3% en poids, par rapport au poids total des constituants de la couche d'émail, sans prendre en compte les solvants. La présence d'un tel additif dans au moins une des couches permet d'une part de limiter le noircissement du produit final et également de conserver une bonne adhésion de la couche d'émail.

La couche d'émail présente, après séchage, une épaisseur comprise entre 10 et 200 µm.De façon préférée, cette épaisseur est comprise entre 20 et 150 µm et, encore plus préférentiellement entre 30 et 120 µm. On peut parler ainsi d'épaisseur de l'émail sec. Cette épaisseur doit être suffisante pour que la couche obtenue après séchage soit suffisamment opaque, mais ne doit pas être trop importante pour que la résine puisse brûler entièrement lors de la trempe. La couche d'émail peut recouvrir une partie ou la totalité d'au moins une des faces du substrat.

La couche d'émail sec présente une adhésion sur le substrat mesurée au test du quadrillage selon la norme ISO 2409:2007 inférieure ou égale à 2, voire inférieure ou égale à 1.

Le substrat est en verre ou en vitrocéramique. Le verre peut être un verre silico-sodo-calcique, mais il peut être également de tout autre type, par exemple de type borosilicate ou alumino-borosilicate. Il peut être clair ou coloré. Le substrat peut avoir subi préalablement un traitement permettant d'augmenter sa rugosité, par exemple par sablage ou par matage à l'acide. L'adhésion de la sous-couche à base de résine sera dans ce cas améliorée.

La rayabilité du substrat revêtu est mesurée en effectuant un test Clemen, selon la norme ISO 1518-1:2011. La couche d'émail sec présente une rayabilité d'au moins 2 N, ce qui est suffisant pour les opérations de transformation industrielle.

Le substrat revêtu de la couche d'émail est « trempable » et peut ainsi remplir la norme de sécurité EN 12150-1 :2000.

La présente invention porte également sur un procédé de préparation d'un substrat en verre ou en vitrocéramique, trempable ou susceptible d'être trempé à une température supérieure ou égale à 600°C, revêtu d'une couche d'émail, tel que décrit précédemment. Le procédé de préparation comprend les étapes suivantes :
a) on dépose, sur au moins une partie d'une des faces dudit substrat une sous-couche à base de résine organique,
b) éventuellement, on sèche le substrat revêtu, à une température inférieure à 150°C,
c) on dépose, sur la sous-couche, une couche d'émail comprenant au moins des constituants inorganiques dont une fritte de verre et un pigment et une résine organique,
d) on sèche le substrat revêtu à une température inférieure à 250°C, de préférence inférieure à 200°C

Le dépôt des couches réalisé aux étapes a) et c) peut être effectué par toute technique connue de l'homme de l'art. Les couches peuvent notamment être déposées par sérigraphie ou selon la technique du rideau. Il n'est pas obligatoire de réaliser une étape de séchage de la sous-couche avant de réaliser l'étape de dépôt de la couche d'émail. Ceci présente notamment une facilité de mise en oeuvre du procédé. L'étape b) du procédé est par conséquent une étape optionnelle, qui si elle est mise en oeuvre sera effectuée en limitant la température de séchage. On pourra par exemple utiliser un simple couteau d'air comme moyen de séchage.

Préalablement à l'étape a), il est possible d'augmenter la rugosité du substrat en le sablant ou le matant à l'acide.

Préalablement à l'étape a), il est également possible de déposer une couche d'un agent promoteur d'adhésion.

En fonction de l'épaisseur de la couche d'émail souhaitée, il est envisageable d'effectuer plusieurs étapes de dépôt successives. De façon préférée, si on souhaite réaliser des dépôts successifs d'émail, il est souhaitable de réaliser une étape de séchage entre deux dépôts successifs.

Le produit ainsi obtenu peut ensuite, si l'utilisateur le souhaite, être trempé à une température supérieure ou égale à 600°C.

Les exemples ci-dessous illustrent l'invention sans en limiter la portée.

### Exemple:

Une couche d'émail commercial vendu par la société Ferro sous la référence 194011 contenant une résine de type acrylate, dans une proportion telle qu'une fois séché l'émail contienne 8%en poids de résine, est déposée par sérigraphie sur un substrat en verre extra-clair de type Diamant® préalablement nettoyé au savon, puis est séchée à 150°C. L'épaisseur de la couche d'émail, mesurée après séchage, est de l'ordre de 20 µm.

Cet échantillon A est utilisé comme référence.

Un échantillon B comparatif est préparé de la façon suivante : avant de déposer la couche d'émail utilisée pour l'échantillon A, le substrat en verre extra-clair de type Diamant®, préalablement nettoyé au savon, est revêtu d'une monocouche de l'agent promoteur d'adhésion de méthacrylate de 3-(triméthoxysilyl)-propyle (CAS n° 2530-85-0). Ce pré-traitement du substrat est réalisé par chiffonage d'une solution contenant ce silane dilué à 1%en poids dans l'alcool.

Une sous-couche de résine acrylate est déposée par sérigraphie sur un substrat en verre extra-clair de type Diamant® préalablement nettoyé au savon. L'épaisseur de la sous-couche à base de résine acrylate, mesurée après séchage par microscopie électronique à balayage, est de l'ordre de 1,3 µm.

Une couche d'émail 194011 est ensuite déposée sur la sous-couche par sérigraphie, puis l'ensemble sous-couche et couche d'émail est séché à 150°C.

On obtient ainsi l'échantillon C.

Un échantillon D est préparé de la façon suivante : avant de déposer la sous-couche utilisée pour l'échantillon A, de la même manière que pour l'échantillon B, le substrat en verre extra-clair de type Diamant®, préalablement nettoyé au savon, est revêtu d'une monocouche de l'agent promoteur d'adhésion de méthacrylate de 3-(triméthoxysilyl)-propyle. Puis la sous-couche à base de résine acrylate est déposée sur cette monocouche de promoteur d'adhésion de la même façon que lors de la préparation de l'échantillon C. L'épaisseur de la sous-couche à base de résine acrylate, mesurée après séchage par microscopie électronique à balayage, est de l'ordre de 1,2 µm.

Puis comme pour l'échantillon C, une couche d'émail est déposée sur la sous-couche et est séchée à 150°C. L'épaisseur de la couche d'émail, mesurée après séchage, est de l'ordre de 20 µm.

Les performances avant trempe de ces 4 échantillons sont comparées.
Les résultats obtenus sont donnés dans le tableau suivant :

| | Rayabilité avant trempe (N) Test Clemen | Adhésion avant trempe (test du quadrillage) |
|---|---|---|
| Échantillon A de référence | 1 | 5 |
| Échantillon B comparatif | 3 | 2 |
| Echantillon C selon l'invention | 4 | 1 |
| Echantillon D selon l'invention | 5 | 0 |

On constate que la tenue mécanique de l'émail est améliorée par l'agent promoteur d'adhésion (échantillon B), mais qu'elle est encore plus largement améliorée pour les échantillons C et D qui comprennent une sous-couche à base de résine organique (la note d'adhésion est d'autant plus basse que la couche adhère au substrat). En présence d'une couche d'agent promoteur d'adhésion, les performances sont encore améliorées.

## Revendications

1. Substrat en verre ou en vitrocéramique, trempable ou susceptible d'être trempé à une température supérieure ou égale à 600°C, revêtu au moins en partie d'une sous-couche à base de résine organique et d'une couche d'émail comprenant une résine organique et des constituants inorganiques dont au moins une fritte de verre et au moins un pigment, ladite sous-couche étant située entre le substrat et la couche d'émail.

2. Substrat selon la revendication 1 **caractérisé en ce que** la résine organique présente dans la sous-couche est du type résine acrylate ou polyacrylate, résine alkyde, résine époxy, résine polyuréthane, résine amino, résine acrylique, résine polyester, résine polyamide, résine phénolique, résine cellulosique.

3. Substrat selon l'une des revendications 1 ou 2 **caractérisé en ce que** la sous-couche comprend au moins 90% en poids de résine organique.

4. Substrat selon l'une des revendications 1 ou 2 **caractérisé en ce que** la résine organique de la couche d'émail est du même type chimique que celle de la sous-couche.

5. Substrat selon l'une des revendications précédentes **caractérisé en ce que** la couche d'émail comprend entre 5 et 25 %en poids de résine organique, par rapport au poids total des constituants de l'émail séché.

6. Substrat selon l'une des revendications précédentes **caractérisé en ce que** la sous-couche a une épaisseur mesurée après séchage de moins de 10 µm, de préférence inférieure à 5 µm.

7. Substrat selon l'une des revendications précédentes **caractérisé en ce que** le substrat est revêtu d'une couche de promoteur d'adhésion, placée en dessous de la sous-couche à base de résine, directement en contact du substrat

8. Substrat selon l'une des revendications précédentes **caractérisé en ce que** la sous-couche et/ou la couche d'émail comprennent en outre au moins un additif choisi parmi l'amidon, les oxalates, les polylactates, les nitrates d'alcalin, les carbonates d'alcalin et les sulfates d'alcalin.

9. Substrat selon la revendication 8 **caractérisé en ce que** la teneur en additifs est comprise entre 0,01 et 5 % en poids, de préférence entre 0,1 et 3% en poids, par rapport au poids total des constituants de la couche d'émail.

10. Substrat selon l'une des revendications 1 à 9 **caractérisé en ce que** la couche d'émail après séchage à une température inférieure à 250°C a une épaisseur comprise entre 10 et 200 µm, de préférence entre 20 et 150 µm et, encore plus préférentiellement entre 3 et 120 µm.

11. Substrat selon l'une des revendications précédentes **caractérisé en ce que** la sous-couche comprend une résine acrylate et la couche d'émail comprend une résine comprenant au moins un composé choisi parmi un monomère présentant une fonctionnalité comprise entre 1 et 6 et un oligomère insaturé de type acrylate.

12. Procédé de préparation d'un substrat en verre ou en vitrocéramique, trempable ou susceptible d'être trempé à une température supérieure ou égale à 600°C, revêtu d'une couche d'émail selon l'une des revendications 1 à 11 dans lequel :
a) on dépose, sur au moins une partie d'une des faces dudit substrat une sous-couche à base de résine organique
b) éventuellement, on sèche le substrat revêtu, à une température inférieure à 150°C,
c) on dépose, sur la sous-couche, une couche d'émail comprenant au moins des constituants inorganiques dont une fritte de verre et un pigment et une résine organique,
d) on sèche le substrat revêtu à une température inférieure à 250°C, de préférence inférieure à 200°C.

13. Procédé selon la revendication 12 **caractérisé en ce que**, préalablement à l'étape a) on dépose sur au moins une partie d'une des faces du substrat une couche d'un agent promoteur d'adhésion.

## Patentansprüche

1. Substrat aus Glas oder aus Glaskeramik, das bei einer Temperatur von über oder gleich 600 °C vorspannbar ist oder möglicherweise vorgespannt wird, beschichtet mindestens zum Teil mit einer Unterschicht auf der Basis eines organischen Harzes und einer Emailschicht, umfassend ein organisches Harz und anorganische Bestandteile, darunter mindestens eine Glasfritte und mindestens ein Pigment, wobei die Unterschicht zwischen dem Substrat und der Emailschicht liegt.

2. Substrat nach Anspruch 1, **dadurch gekennzeichnet, dass** das organische Harz, das in der Unterschicht vorliegt, vom Typ Acrylat- oder Polyacrylartharz, Alkydharz, Epoxidharz, Polyurethanharz, Aminoharz, Acrylharz, Polyesterharz, Polyamidharz, Phenolharz, Zelluloseharz ist.

3. Substrat nach einem der Ansprüche 1 oder 2, **dadurch gekennzeichnet, dass** die Unterschicht mindestens 90 Gew.-% organisches Harz umfasst.

4. Substrat nach einem der Ansprüche 1 oder 2, **dadurch gekennzeichnet, dass** das organische Harz der Emailschicht vom selben chemischen Typ wie das der Unterschicht ist.

5. Substrat nach einem der vorhergehenden Ansprüche, **dadurch gekennzeichnet, dass** die Emailschicht zwischen 5 und 25 Gew.-% organisches Harz, bezogen auf das Gesamtgewicht der Bestandteile des getrockneten Emails, umfasst.

6. Substrat nach einem der vorhergehenden Ansprüche, **dadurch gekennzeichnet, dass** die Unterschicht eine Stärke, gemessen nach dem Trocknen, von weniger als 10 µm, bevorzugt unter 5 µm, hat.

7. Substrat nach einem der vorhergehenden Ansprüche, **dadurch gekennzeichnet, dass** das Substrat mit einer Schicht eines Haftungspromoters beschichtet ist, die unter der Unterschicht auf Harzbasis, direkt in Berührung mit dem Substrat, platziert ist.

8. Substrat nach einem der vorhergehenden Ansprüche, **dadurch gekennzeichnet, dass** die Unterschicht und/oder die Emailschicht außerdem mindestens einen Zusatzstoff umfassen, der aus der Stärke, den Oxalaten, den Polylactaten, den Alkalinitraten, den Alkalicarbonaten und den Alkalisulfaten ausgewählt ist.

9. Substrat nach Anspruch 8, **dadurch gekennzeichnet, dass** der Gehalt an Zusatzstoffen zwischen 0,01 und 5 Gew.-%, bevorzugt zwischen 0,1 und 3 Gew.-% bezogen auf das Gesamtgewicht der Bestandteile der Emailschicht, beträgt.

10. Substrat nach einem der Ansprüche 1 bis 9, **dadurch gekennzeichnet, dass** die Emailschicht nach dem Trocknen bei einer Temperatur unter 250 °C eine Stärke zwischen 10 und 200 µm, bevorzugt zwischen 20 und 150 µm und noch bevorzugter zwischen 3 und 120 µm hat.

11. Substrat nach einem der vorhergehenden Ansprüche, **dadurch gekennzeichnet, dass** die Unterschicht ein Acrylatharz umfasst und die Emailschicht ein Harz umfasst, umfassend mindestens eine Verbindung, die aus einem Monomer, das eine Funktionalität zwischen 1 und 6 aufweist, und einem ungesättigten Oligomer vom Typ Acrylat ausgewählt ist.

12. Verfahren zur Herstellung eines Substrats aus Glas oder aus Glaskeramik, das bei einer Temperatur von über oder gleich 600 °C vorspannbar ist oder möglicherweise vorgespannt wird, beschichtet mit einer Emailschicht nach einem der Ansprüche 1 bis 11, wobei:
a) auf mindestens einem Teil einer der Seiten des Substrats eine Unterschicht auf der Basis organischen Harzes aufgebracht wird,
b) das beschichtete Substrat eventuell bei einer Temperatur unter 150 °C getrocknet wird,
c) auf der Unterschicht eine Emailschicht aufgebracht wird, die mindestens anorganische Bestandteile, darunter eine Glasfritte und ein Pigment, und ein organisches Harz umfasst,
d) das beschichtete Substrat bei einer Temperatur unter 250 °C, bevorzugt unter 200 °C, getrocknet wird.

13. Verfahren nach Anspruch 12, **dadurch gekennzeichnet, dass** vor dem Schritt a) auf mindestens einem Teil einer der Seiten des Substrats eine Schicht eines Haftungspromoters aufgebracht wird.

## Claims

1. Glass or glass-ceramic substrate, temperable or capable of undergoing tempering at a temperature greater than or equal to 600°C, coated at least partially with a sublayer based on organic resin and with an enamel layer comprising an organic resin and inorganic constituents including at least one glass frit and at least one pigment, said sublayer being located between the substrate and the enamel layer.

2. Substrate according to Claim 1, **characterized in that** the organic resin present in the sublayer is of acrylate or polyacrylate resin, alkyd resin, epoxy resin, polyurethane resin, amino resin, acrylic resin, polyester resin, polyamide resin, phenolic resin or cellulose resin type.

3. Substrate according to either of Claims 1 and 2, **characterized in that** the sublayer comprises at least 90% by weight of organic resin.

4. Substrate according to either of Claims 1 and 2, **characterized in that** the organic resin of the enamel layer is of the same chemical type as that of the sublayer.

5. Substrate according to one of the preceding claims, **characterized in that** the enamel layer comprises between 5% and 25% by weight of organic resin, relative to the total weight of the constituents of the dried enamel.

6. Substrate according to one of the preceding claims, **characterized in that** the sublayer has a thickness, measured after drying, of less than 10 µm, preferably of less than 5 µm.

7. Substrate according to one of the preceding claims, **characterized in that** the substrate is coated with an adhesion-promoting layer, placed beneath the resin-based sublayer, directly in contact with the substrate.

8. Substrate according to one of the preceding claims, **characterized in that** the sublayer and/or the enamel layer additionally comprise at least one additive selected from starch, oxalates, polylactates, alkali metal nitrates, alkali metal carbonates and alkali metal sulphates.

9. Substrate according to Claim 8, **characterized in that** the content of additives is between 0.01% and 5% by weight, preferably between 0.1% and 3% by weight, relative to the total weight of the constituents of the enamel layer.

10. Substrate according to one of Claims 1 to 9, **characterized in that** the enamel layer, after drying at a temperature below 250°C, has a thickness between 10 and 200 µm, preferably between 20 and 150 µm and, more preferably still, between 3 and 120 µm.

11. Substrate according to one of the preceding claims, **characterized in that** the sublayer comprises an acrylate resin and the enamel layer comprises a resin comprising at least one compound selected from a monomer having a functionality of between 1 and 6 and an unsaturated oligomer of acrylate type.

12. Process for preparing a glass or glass-ceramic substrate, temperable or capable of undergoing tempering at a temperature greater than or equal to 600°C, coated with an enamel layer according to one of Claims 1 to 11, in which:
a) a sublayer based on organic resin is deposited on at least one portion of one of the faces of said substrate,
b) optionally, the coated substrate is dried at a temperature below 150°C,
c) an enamel layer comprising at least inorganic constituents including a glass frit and a pigment and an organic resin is deposited on the sublayer,
d) the coated substrate is dried at a temperature below 250°C, preferably below 200°C.

13. Process according to Claim 12, **characterized in that**, prior to step a), a layer of an adhesion-promoting agent is deposited on at least one portion of one of the faces of the substrate.
